# EUROPEAN PATENT SPECIFICATION

(11) **EP 2 417 849 B1**
(45) Date of publication and mention of the grant of the patent: **17.04.2013**
(21) Application number: 11177527.6
(22) Date of filing: 13.08.2011
(51) Int. Cl.: A01D 46/00, B07B 1/15

(54) **Improved agricultural collecting machine, in particular for nuts**
Verbesserte landwirtschaftliche Sammelmaschine, insbesondere für Nüsse
Machine de cueillette agricole améliorée, en particulier pour les noix

(30) Priority: 13.08.2010 IT TO20100696
(43) Date of publication of application: 15.02.2012
(73) Proprietor: Monchiero & C. s.n.c., BRA (Cuneo) (IT)
(72) Inventor: Monchiero, Mauro, 12062 Cherasco (IT); Monchiero, Massimo, 12042 Bra (IT)
(74) Representative: Jorio, Paolo

(56) References cited:
- EP-A1- 0 410 807
- FR-A1- 2 934 181
- GB-A- 2 145 612
- US-A- 3 247 909
- US-A- 5 740 922

## Description

The present invention concerns a collecting machine, preferably a vehicle, in particular for agricultural products which must be collected from the ground like hazelnuts, walnuts and almonds, and also apples, apricots etc.

When a fruit which has grown on a plant is collected from the ground, some conflicting needs have to be taken into consideration.

In the case of damp ground, for example after rain, the fruit must be collected as quickly as possible to avoid the formation of moulds which compromise the quality of the fruit. However, when the fruit is collected quickly by machines, the rollers of the latter also collect a large quantity of waste, i.e. branches, leaves and stones.

Collecting machines configured to select, for example by blowing, the waste material from the fruit in a time interval immediately after collection are known. Said machines are either towed by a tractor directly to the place of collection or are mounted on board agricultural vehicles. In any case, said machines are particularly suitable for collecting dry material and separation is relatively slow. Therefore, a known blowing machine is not suitable for performing rapid collection, in particular of damp or wet material.

Furthermore, there is always the need, especially for certain crops like walnuts and hazelnuts, to use compact machines or vehicles which are easier to handle on steep ground and between close rows.

FR-A-2934181 discloses a collecting machine according to the preamble of claim 1, the configuration of such machine being improvable towards higher efficiency and more compact dimensions.

The object of the present invention is to produce an improved collecting machine capable of meeting, at least partially, the needs specified above.

The object of the present invention is achieved by a machine according to claim 1.

For a better understanding of the present invention a preferred embodiment is now described, purely by way of nonlimiting example, with reference to the accompanying drawings in which:
- figure 1 is a schematic cross section of a machine according to the present invention;
- figure 2 is a schematic plan view of figure 1;
- figure 3 is a schematic cross section of a second embodiment of the machine according to the present invention;

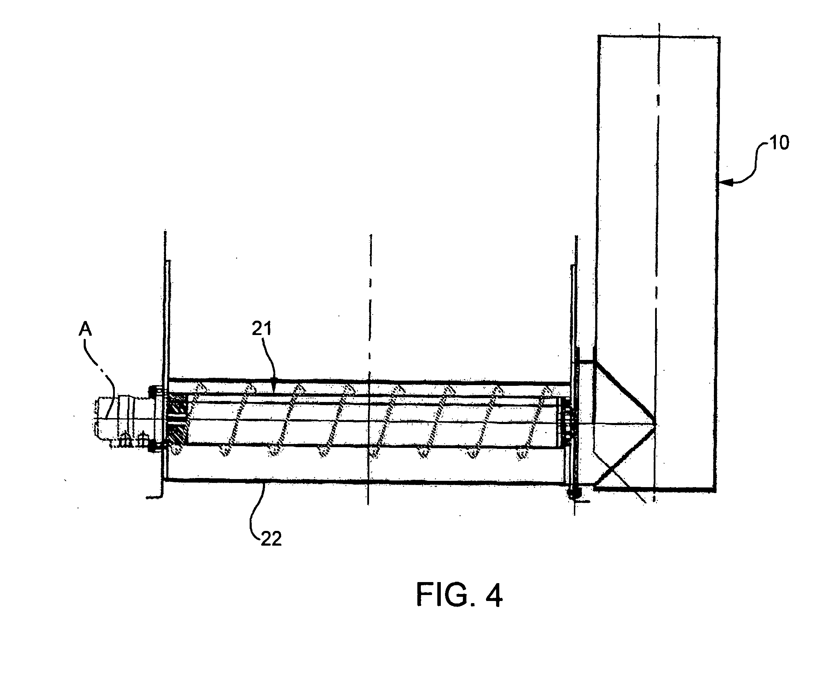

- figure 4 is a view partially in section of a further selection stage of a machine according to the present invention;
- figure 5 is a plan view of a detail of figure 4 with details removed for clarity; and
- figure 6 is a plan view of the detail of figure 5 in a condition ready for assembly.

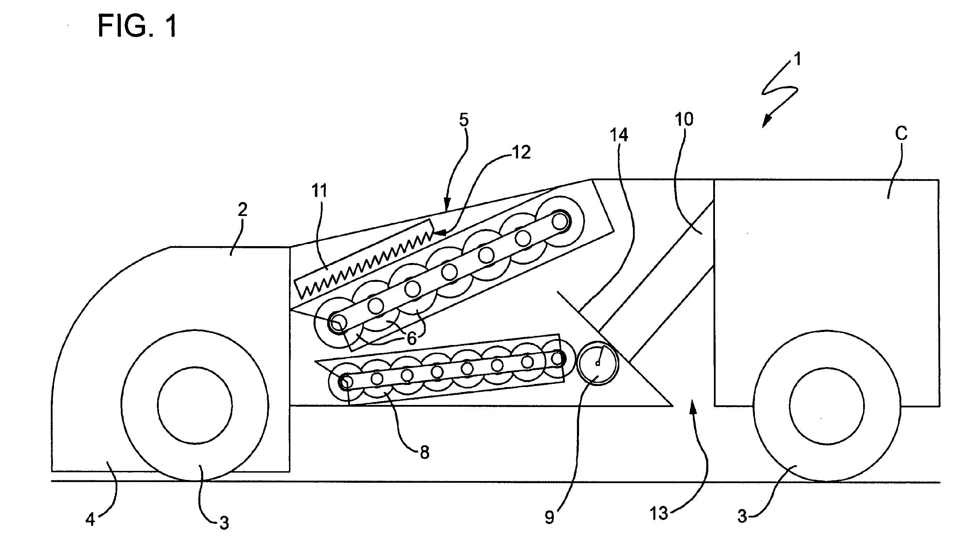

In the diagram of figure 1, the reference number 1 illustrates overall a collecting vehicle comprising a frame 2, a plurality of wheels 3 hinged to the frame 2 and an engine (not illustrated) connected to the wheels 3 to move the vehicle 1. Preferably the engine is an internal combustion engine.

The vehicle 1 furthermore comprises a collecting device 4 to collect loose material from the ground, a selection device 5 which receives the loose material from the collecting device 4 and separates the waste from the fruit and a container element C or bags which receive the fruit from the selection module.

The collecting device 4 can have numerous known configurations, for example it can comprise a plurality of rotating brushes which brush the ground so as to collect the loose material comprising leaves, branches, fruit and other to send it towards the inlet of the selection device 5. Preferably, the collecting device 4 performs the function of collecting and lifting the loose material from the ground since the selection module inlet has a distance from the ground much greater than the mean dimension of the fruit to be collected. For this purpose, the rotating brushes rotate around a horizontal axis.

According to a particular embodiment of the present invention, the selection device 5 is a revolving screen comprising a plurality of rollers 6 rotating around respective axes parallel to one another. Each roller 6 comprises a plurality of radial lugs arranged so that the lugs of two adjacent rollers 6 are at least partially facing in a lateral direction. Furthermore, the lugs of a roller 6 are axially spaced by a distance such as to permit housing of the radial lugs of the adjacent roller 6. The radial lugs of each roller 6 are mounted on a relative shaft 7 so as to define through apertures towards the ground delimited in the axial direction by two adjacent lugs mounted on the same roller and in a direction perpendicular to the shaft 7 by the latter and by the end portion of a radial lug of an adjacent roller.

In this way the through apertures, by means of the radial and axial dimension of the radial lugs, define a screen which selects the dimension of the loose material that passes through the calibrated apertures defined between the rollers 6. Preferably the rollers 6 are arranged on the same plane and are rotated at the same module angular velocity and direction angular velocity by one single motor, for example hydraulic, and a flexible drive, for example a chain drive, connected to the hydraulic motor. In this way a component of translational movement imparted by the rollers 6 to the loose material is defined.

According to a preferred embodiment of the present invention, the selection device 5 has a second stage, i.e. a second plurality of rollers 8 positioned between the rollers 6 and the ground. In particular, the first stage and the second stage are configured so that the second stage is reached by the fruit to be collected already screened by the first stage, the latter having performed a selection to prevent waste with dimensions larger than the fruit from reaching the second stage. Furthermore, the second stage is configured to retain the fruit and discard onto the ground material with dimensions smaller than the fruit.

Furthermore, also the rollers 8 have radial lugs configured like those previously described to define a revolving screen. However, the size of the spaces between adjacent rollers 8 is different from that of the rollers 6. In particular, the empty space between the radial lugs of the rollers 8 is smaller than the space between the radial lugs of the rollers 6. In this way, the selection performed by the rollers 6 keeps the loose material having a relatively high piece size, for example branches, above the rollers 6 and allows the fruit to drop by gravity towards the second stage. The selection performed by the rollers 8 allows the fruit to remain on board the vehicle while it allows passage of the loose material having a smaller piece size than the fruit, for example stones.

Furthermore, also the speed of the rollers 6 is different from that of the rollers 8 to generate a particularly efficient separation effect. In particular, the rollers 8 have an angular velocity higher than that of the rollers 6. In this way, the fruit, which has a relatively low mass compared to the stones, can bounce off whereas the heavier items like the stones are discarded onto the ground. When the fruit bounces off by means of a sussultatory movement, furthermore, it is separated from membranes or undesired adhering materials such as damp pieces of leaf or soil.

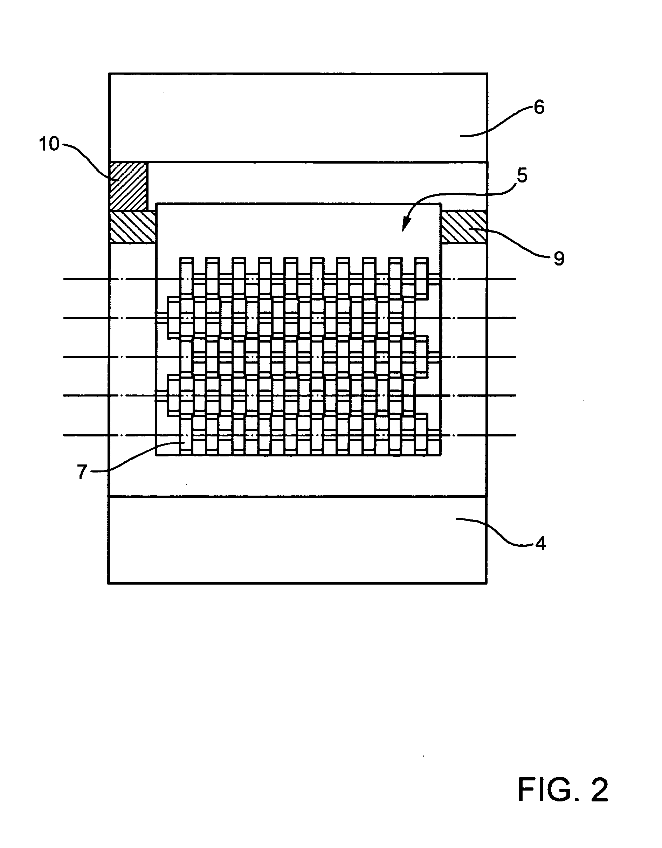

As illustrated in figure 2, the selection device 5 is followed by a collector 9 which collects the material selected by means of the selection device 5 and a conveyor 10 which conveys the selected material towards the collecting element C. Preferably, the collecting element C is a removable box mounted in a releasable manner on the frame 2. According to a preferred but not exclusive embodiment, the collector 9 is an auger having a rotation axis parallel to that of the rollers 6, 8 and the conveyor 10 is also an auger having a rotation axis transverse to that of the collector 9.

It is preferable for the radial lugs of the rollers 6, 8 to be yielding so as not to damage the fruit. For example elastomers can be used, if necessary reinforced, or bristles of polymeric or metallic material.

Advantageously, the first stage of the selection device 5, i.e. the rollers 6, can be combined with a wall 11 having a shaped surface 12 facing towards the rollers 6. The shaped surface 12 has a plurality of appendixes, for example curved projections, which cooperate with the loose material arriving from the collecting device 4 and separate the fruit from the stones, leaves and branches. By breaking down any agglomerates, in fact, the selection efficiency of the first stage of the selection device 5 increases. In fact, if an agglomerate were not broken up, it could not fall by gravity towards the second stage and it would therefore be discarded even though it may contain fruit.

In addition, the first stage of the selection device 5 is mounted so that the angular position of the latter is adjustable. The inclination of the first stage, in fact, affects separation efficiency. In particular, when the inclination generates a component due to the gravity parallel but opposite to the direction of forward movement of the loose material on the rollers 6, separation is more effective. Conversely, when the component due to the acceleration of gravity is concordant with the direction of forward movement, separation is coarser.

Furthermore, it is possible to mount the wall 12 on a movable support controlled so as to adjust the distance from the rollers 6. In this way, it is possible to adapt the selection device 5 to different conditions of use both when there is a greater likelihood of agglomerates, for example when the ground is damp or wet, and when the selection device 5 is used to select different fruit, i.e. the vehicle 1 can collect both walnuts and hazelnuts which are smaller than walnuts and therefore, in the latter case, the wall 12 is moved closer to the rollers 6.

According to a preferred embodiment of the present invention, the first stage of the selection device 5, i.e. the rollers 6, face towards an aperture 13 positioned between the collector 9 and the wheels 3, in particular the rear wheels. Furthermore, the collector 9 can be surmounted by a sloping wall 14 to protect the collector 9 from the waste material sent from the first stage towards the aperture 13.

Operation of the vehicle 1 is as follows.

The vehicle 1 is driven by a driver onto agricultural land and by means of the collecting device, the loose material present on the ground is lifted and sent to the inlet of the first stage of the revolving screen of the selection module 5. The rollers 6 rotate at a pre-set speed and the relative radial lugs impart to the loose material a component of sussultatory movement and a component of translational movement towards the aperture 13. The sussultatory movement contributes to separating the single components of the loose material. Said separation action is helped by the wall 11 which has a shaped surface 12 configured so as to oppose a greater resistance to the loose material when the latter is directed towards the aperture 13 than if the material were directed from the aperture 13 towards the collecting device 4.

The size of the revolving screen of the first stage is such as to retain and convey towards the aperture 13 the largest elements of the loose material, for example branches and large leaves. The waste material falls by gravity onto the ground via the aperture 13 and does not interfere with the action of the second stage and/or the collector thanks to the protective action of the sloping wall 14. The first stage therefore substantially has a cleaning function.

The loose material that drops onto the second stage of the selection device 5, i.e. onto the rollers 8, receives from the latter a component of sussultatory movement and a component of translational movement towards the collector 9. The sussultatory movement separates the fruit from the waste, and the second stage, if present, substantially has the function of calibrating the dimension of the fruit.

By means of the translation component, the fruit selected is conveyed towards the collector 9 and towards the container element C by the conveyor 10.

The advantages offered by the agricultural machine according to the invention are the following.

Via the combination of a collecting container and a revolving screen it is possible to obtain an agricultural machine that can be moved directly on the collecting field at a high speed with the same capacity for selection of fruit and waste material. The agricultural machine thus obtained is also particularly compact and has a low centre of gravity to adapt to uneven and sloping collecting ground.

Furthermore, the component of translational movement imparted by the revolving screen guides in a dependable manner both the waste material and the fruit even when the vehicle is not perfectly flat, thus making the machine effective at all times even on steep or uneven ground.

Lastly it is clear that modifications or variations can be made to the collecting machine described and illustrated here without departing from the protective scope as defined by the attached claims.

The selection device 5 can be in one single towed module and can be connected to a tractor.

In a non claimed embodiment, the selection device 5 may have one single stage. For example, when large-size fruit is collected, such as apples, the first stage allows the waste material to be discharged and, via the component of translational movement, the apples to be sent directly into the container C. In this last embodiment it is not necessary to provide the aperture 13, the collector 9 and the conveyor 10. Alternatively, it is possible to reconfigure the machine illustrated in figure 1 by mounting a sloping wall also drilled to connect the outlet of the first stage directly to the container C. If said wall is drilled, further waste material can fall by gravity through the aperture 13. Furthermore, a bag or other container can be mounted to replace the detachable box.

The auger can be replaced by other collectors/conveyors, which can be for example air, bucket, belt conveyors etc.

The rotation speed of the rollers 6 and/or the rollers 8 can be automatically controlled if necessary by the user in order to adapt and calibrate the collecting machine to different conditions of the loose material to be collected or to different types of loose material to be collected.

The selection device 5 can be mounted on board a self-propelled vehicle in a fixed or detachable manner. For example, it can be mounted in a detachable manner by means of a three-point connection device. Alternatively, it can be mounted on a trailer, for example with two wheels, in a fixed or detachable manner.

It is possible to provide adjustment of the rotation speed at least of the first stage of the selection device 5, and if necessary also of the second stage. In fact it has been ascertained that the rotation speed of the rollers 6 affects the degree of selection of the material collected, i.e. fruit, and the waste, i.e. branches, leaves etc. Therefore a user can calibrate the selection conditions on the basis of evaluation of the ground conditions before performing the collection operation. Preferably the adjustment is manual and, even more preferably, a device is provided for varying the capacity of the hydraulic motor that operates the selection device 5.

Alternatively, the second stage can comprise a mesh belt to select the fruit from the waste. The mesh belt is moved by means of rollers to allow translation of the fruit towards the container C. The mesh belt can comprise meshes and metal bars appropriately spaced to retain the fruit.

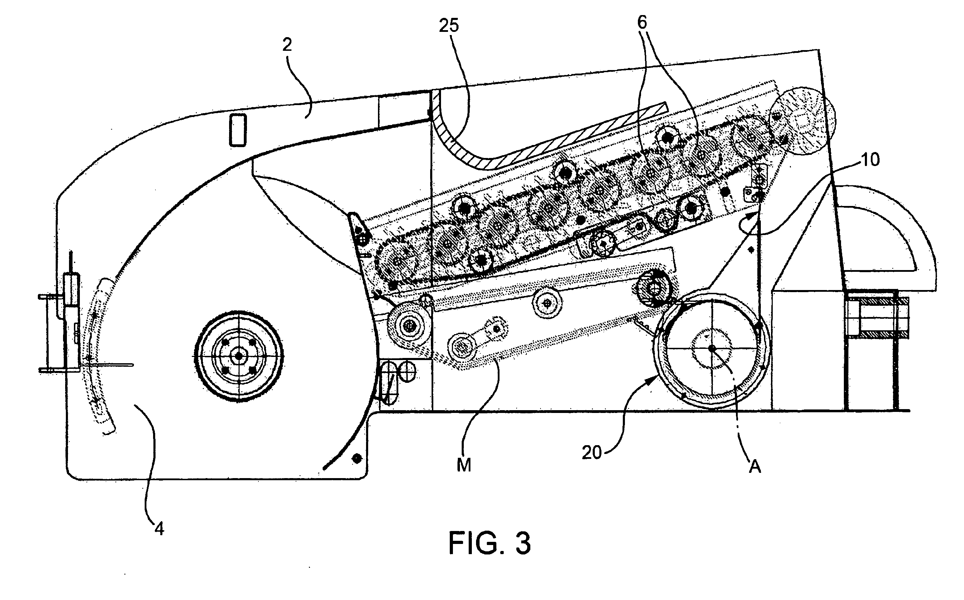

As illustrated in figure 3, the second stage can be combined with a third stage 20 to handle the material collected which is larger than the selection dimension of the screen and is therefore retained by the latter and does not fall onto the ground. The third stage therefore handles the material collected at the outlet of the second stage and directed towards the container C.

Preferably, the third stage comprises a revolving element 21 having an axis A parallel to the ground and mounted inside a cage 22. In use, the revolving element 21, preferably with auger, conveys the material selected by the second stage towards the container C and, during conveying, part of the material to be discarded, for example leaves or branches and more generally substantially one-dimensional elements similar to branches and two-dimensional elements similar to leaves, fall onto the ground through the cage 22. In particular, the cage 22 has grooves such as to allow said one-dimensional or two-dimensional elements with at least one dimension smaller than the characteristic dimension of the fruit to be collected to drop to the ground. Preferably, the cage 22 is concave and defines an aperture to collect the fruit selected by the second stage and to house the auger.

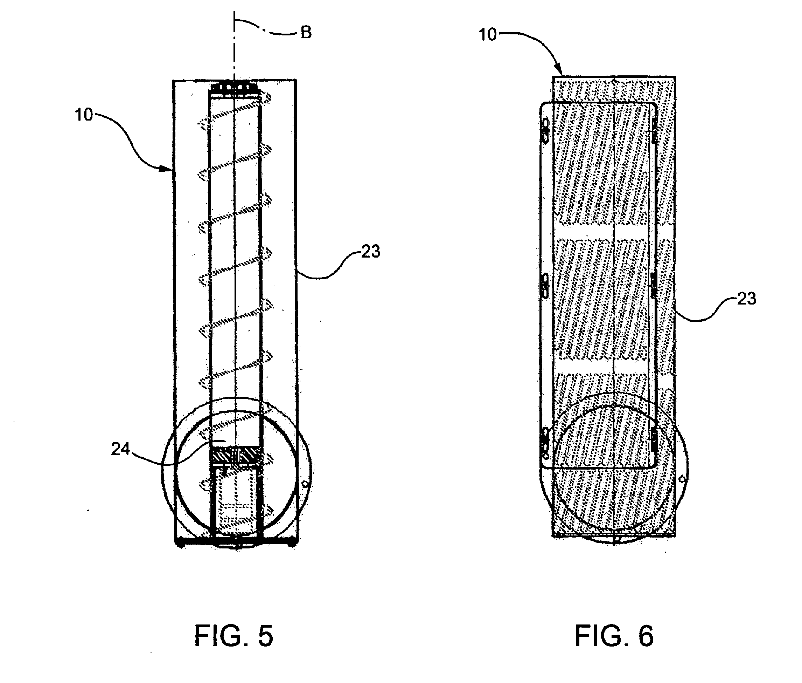

Preferably, the axis A is substantially transverse to the direction of forward movement of the material collected between the second stage and the container C in order to treat at least the majority of the product directed towards the container C. Furthermore, the third stage can comprise the conveyor 10. In this case, the conveyor 10 comprises a cage 23 surrounding an auger 24 with axis B transverse to the axis A. The cage 23 can define grooves having the same form as those of the cage 22 (figure 6) and in any case such as to retain the fruit and eliminate further waste material by gravity. The material collected, conveyed from the bottom upwards by means of the conveyor 10, is thus further selected.

Furthermore, the action of the shaped wall 11 can be efficiently performed also by means of a flexible element rigidly fixed to one of its ends and exerting a pressure, even slight, on the material collected and still to be screened by means of the selection device 5. In particular it has been verified that an element or configuration which partially counters the forward movement of the material collected along the upper rollers 6 of the selection device 5 improves the action of the latter since the material collected tends to recirculate, thus providing a further selection opportunity for any fruit that has not yet fallen by gravity towards the second stage. In this way, the flexible element takes on a shaped form only after mounting, as illustrated by the flexible element 25 of figure 3 which applies a pressure on the material collected via both its own weight and its own deformation.

Furthermore, in a non-claimed embodiment, the machine 1 can be configured to have one single stage defined by the rollers 6 configured so as to retain the fruit and cause the waste material to drop by gravity. The fruit retained by the rollers 6 is translated towards the container C where it drops after being selected by the device 5. For example, the fruit collected by a single-stage machine 1 consists of apples which have a large characteristic dimension with respect to the openings defined between the rollers 6 through which branches, leaves and stones fall.

The rollers 6 are preferably mounted on sliding bushes made of a polymer-matrix composite material also loaded with particles of solid lubricant. In particular the composite material is substantially homogeneous, i.e. not in layers, so as to present the same characteristics of lubrication and mechanical resistance also to high temperatures regardless of wear. The material previously defined has allowed the production of a machine able to operate without excessive maintenance and in an effective manner for a long time also in very dirty conditions.

The second stage may also be obtained in other ways in addition to those described so far, for example by means of a vibrating screen. Roller or wire mesh screens constitute a preferred class for obtaining greater separation efficiency and high selection speeds.

## Claims

1. A machine that can be transported to an agricultural field to select fruit from loose material collected from the ground comprising a frame (2) and a rotating roller screen selection device (5) mounted on said frame (2) and configured to impart to the loose material a component of sussultatory movement and a component of translational movement, **characterised in that** it comprises a container (C) arranged downstream of said rotating roller screen selection device (5) towards which said translational movement is directed, a collector (9) towards which said translational movement is directed to collect the selected fruit and
**in that** said rotating roller screen selection device (5) comprises a first stage (6) configured to select a product which falls by gravity through the latter, and a second stage (8) configured to retain the collected material received from said first stage (6) and convey it towards said container (C) via said collector (9) so that the waste is disposed of- by gravity, passing through said second stage (8), said machine further comprising a protective wall (14) positioned between said first stage and said collector (9) to prevent the waste material coming from said first stage being collected by said collector (9).

2. Agricultural machine as claimed in claim 1, **characterised in that** said second stage (8) is arranged in series with respect to said first stage and has selection characteristics different from the latter.

3. Agricultural machine as claimed in claim 2, **characterised in that** said second stage is provided with rotating rollers or comprises a mesh belt (M).

4. Agricultural machine as claimed in any one of the preceding claims, **characterised in that** it comprises a further separation stage (20) comprising a cage (22, 23).

5. Agricultural machine as claimed in claim 4, **characterized in that** said cage (22, 23) has grooves such as to allow to drop to the ground one-dimensional or two-dimensional elements with at least one dimension smaller than the characteristic dimension of the fruit to be collected.

6. Agricultural machine according to claim 5, **characterized in that** said third screening stage (20) comprises an auger mounted inside said cage (22, 23).

7. Agricultural machine according to claim 6, **characterized in that** the auger is revolving around an axis (A) parallel to the ground.

8. Agricultural machine according to any of claims 4 to 7, **characterized in that** said cage (22) is concave to collect the crop selected by said second stage (8).

9. Machine as claimed in any one of the preceding claims, **characterised in that** it comprises a control system to manually control the rotation speed of said rotating roller screen selection device (5).

10. Machine as claimed in any one of the preceding claims, **characterised in that** said rotating roller screen selection device (5) comprises a plurality of rotating radial lugs made of soft material in order not to damage the fruit.

11. Agricultural machine as claimed in any one of the preceding claims, **characterised in that** said rotating roller screen selection device (5) is connected to said frame (2) so that the inclination with respect to the component of translational movement is adjustable.

12. Agricultural machine as claimed in any of the preceding claims, **characterised in that** it comprises an aperture (13) arranged between said rotating roller screen selection device (5) and said container (C) towards which the translational movement of the first stage is directed to dispose of the waste material on the ground.

13. Agricultural machine as claimed in any one of the preceding claims, **characterised in that** it comprises a shaped or flexible wall (11, 25) facing said rotating roller screen selection device (5), said wall being configured to counter the forward movement of the loose material in the direction of the translational movement and thus contribute to breaking down any agglomerates.

14. Agricultural machine as claimed in any one of the preceding claims, **characterised in that** it comprises a plurality of sliding bushes to radially support the rollers (6, 8) of said rotating roller screen selection device (5), said sliding bushes being made of a polymer-matrix composite material with substantially homogeneous structure.

## Patentansprüche

1. Maschine, die zu einem landwirtschaftlichen Feld transportiert werden kann, um aus losem Material, das von dem Boden aufgesammelt wurde, Früchte auszuwählen, umfassend einen Rahmen (2) und eine Drehwalzen-Klassiervorrichtung (5), die auf dem Rahmen (2) montiert und konfiguriert ist, dem losen Material eine auf-und-ab-Komponente der Bewegung und eine Translationskomponente der Bewegung zu verleihen, **dadurch gekennzeichnet, dass** sie einen ablaufseitig von der Drehwalzen-Klassiervorrichtung (5) angeordneten Behälter (C) umfasst, zu dem hin die Translationsbewegung gerichtet ist, sowie eine Sammelvorrichtung (9) um die ausgewählten Früchte aufzusammeln, zu der hin die Translationsbewegung gerichtet ist, und dadurch dass die Drehwalzen-Klassiervorrichtung (5) eine erste Stufe (6) umfasst, konfiguriert zum Auswählen eines Produktes, welches mittels Schwerkraft durch sie hindurch fällt, sowie eine zweite Stufe (8), konfiguriert das von der ersten Stufe (6) empfangene Material zu behalten und es über die Sammelvorrichtung (9) so zu dem Behälter (C) zu befördern, dass der Abfall mittels Schwerkraft weggeworfen wird, indem er die zweite Stufe (8) durchläuft, wobei die Maschine ferner eine Schutzwand (14) umfasst, die sich zwischen der ersten Stufe und der Sammelvorrichtung (9) befindet, um zu verhindern, dass das aus der ersten Stufe kommende Abfallmaterial von der Sammelvorrichtung (9) aufgesammelt wird.

2. Landwirtschaftliche Maschine gemäß Anspruch 1, **dadurch gekennzeichnet, dass** die zweite Stufe (8) in Bezug auf die erste Stufe in Reihe angeordnet ist und von dieser verschiedene Auswahlmerkmale aufweist.

3. Landwirtschaftliche Maschine gemäß Anspruch 2, **dadurch gekennzeichnet, dass** die zweite Stufe mit sich drehenden Walzen versehen ist oder ein Siebband (M) umfasst.

4. Landwirtschaftliche Maschine gemäß irgendeinem der vorhergehenden Ansprüche, **dadurch gekennzeichnet, dass** sie eine weiter Trennstufe (20) umfassend einen Kasten (22, 23) umfasst.

5. Landwirtschaftliche Maschine gemäß Anspruch 4, **dadurch gekennzeichnet, dass** der Kasten (22, 23) Schlitze aufweist, um eindimensionale oder zweidimensionale Elemente, die um mindestens ein Abmaß kleiner sind als die kennzeichnenden Abmaße der aufzusammelnden Frucht, hinunter auf den Boden fallen zu lassen.

6. Landwirtschaftliche Maschine gemäß Anspruch 5, **dadurch gekennzeichnet, dass** die dritte Klassierstufe (20) eine innerhalb des Kastens (22, 23) angebrachte Einzugwalze umfasst.

7. Landwirtschaftliche Maschine gemäß Anspruch 6, **dadurch gekennzeichnet, dass** die Einzugwalze sich um eine zum Boden parallele Achse (A) dreht.

8. Landwirtschaftliche Maschine gemäß irgendeinem der Ansprüche 4 bis 7, **dadurch gekennzeichnet, dass** der Kasten (22) konkav ist, um die von der zweiten Stufe (8) ausgewählte Feldfrucht zu sammeln.

9. Landwirtschaftliche Maschine gemäß irgendeinem der vorhergehenden Ansprüche, **dadurch gekennzeichnet, dass** sie eine Steuerung umfasst, um die Umdrehungsgeschwindigkeit der Drehwalzen-Klassiervorrichtung (5) von Hand zu steuern.

10. Landwirtschaftliche Maschine gemäß irgendeinem der vorhergehenden Ansprüche, **dadurch gekennzeichnet, dass** die Drehwalzen-Klassiervorrichtung (5) eine Vielzahl von sich drehenden radialen Greifern umfasst, die aus einem weichen Material hergestellt sind, um die Frucht nicht zu beschädigen.

11. Landwirtschaftliche Maschine gemäß irgendeinem der vorhergehenden Ansprüche, **dadurch gekennzeichnet, dass** die Drehwalzen-Klassiervorrichtung (5) so mit dem Rahmen (2) verbunden ist, dass die Neigung in Bezug auf die Translationskomponente der Bewegung einstellbar ist.

12. Landwirtschaftliche Maschine gemäß irgendeinem der vorhergehenden Ansprüche, **dadurch gekennzeichnet, dass** sie eine Öffnung (13) angeordnet zwischen der Drehwalzen-Klassiervorrichtung (5) und dem Behälter (C) umfasst, zu welcher hin die Translationsbewegung der ersten Stufe gerichtet ist, um das Abfallmaterial auf den Boden wegzuwerfen.

13. Landwirtschaftliche Maschine gemäß irgendeinem der vorhergehenden Ansprüche, **dadurch gekennzeichnet, dass** sie eine der Drehwalzen-Klassiervorrichtung (5) zugewandte, geformte oder flexible Wand (11, 25) umfasst, wobei die Wand ausgebildet ist, der Vorwärtsbewegung des losen Materials in der Richtung der Translationsbewegung entgegenzuwirken und auf diese Weise dazu beizutragen, irgendwelche Agglomerate aufzubrechen.

14. Landwirtschaftliche Maschine gemäß irgendeinem der vorhergehenden Ansprüche, **dadurch gekennzeichnet, dass** sie eine Vielzahl von gleitenden Laufbuchsen umfasst, um die Walzen (6, 8) der Drehwalzen-Klassiervorrichtung (5) radial zu lagern, wobei die Laufbuchsen aus einem Polymermatrix-Verbundmaterial mit im Wesentlichen homogener Struktur hergestellt sind.

## Revendications

1. Machine qui peut être transportée jusque dans un champ agricole pour sélectionner des fruits à partir de matière en vrac recueillie au sol comprenant un châssis (2) et un dispositif de sélection de type tamis à cylindres rotatifs (5) monté sur ledit châssis (2) et conçu pour communiquer à la matière en vrac une composante de mouvement à oscillations verticales et une composante de mouvement de translation, **caractérisée en ce qu'**elle comprend un conteneur (C) disposé en aval dudit dispositif de sélection de type tamis à cylindres rotatifs (5) vers lequel est dirigé ledit mouvement de translation, un dispositif de collecte (9) vers lequel est dirigé ledit mouvement de translation pour collecter les fruits sélectionnés et **en ce que** ledit dispositif de sélection de type tamis à cylindres rotatifs (5) comprend un premier étage (6) conçu pour sélectionner un produit qui tombe par gravité à travers cet étage, et un deuxième étage (8) conçu pour retenir la matière collectée reçue dudit premier étage (6) et la transporter vers ledit conteneur (C) par le biais dudit dispositif de collecte (9) de manière que les déchets soient rejetés, par gravité, en passant à travers ledit deuxième étage (8), ladite machine comprenant, en outre, une paroi de protection (14) située entre ledit premier étage et ledit dispositif de collecte (9) afin d'empêcher que les déchets provenant dudit premier étage soient collectés par ledit dispositif de collecte (9).

2. Machine agricole selon la revendication 1, **caractérisée en ce que** ledit deuxième étage (8) est agencé en série par rapport audit premier étage et présente des caractéristiques de sélection différentes de celles du premier étage.

3. Machine agricole selon la revendication 2, **caractérisée en ce que** ledit deuxième étage est pourvu de cylindres rotatifs ou comprend une bande perforée (M).

4. Machine agricole selon l'une quelconque des revendications précédentes, **caractérisée en ce qu'**elle comprend un étage de séparation supplémentaire (20) comprenant une cage (22, 23).

5. Machine agricole selon la revendication 4, **caractérisée en ce que** ladite cage (22, 23) comporte des gorges pour permettre la chute jusqu'au sol des éléments à une dimension ou à deux dimensions, au moins une dimension étant plus petite que la dimension caractéristique des fruits à collecter.

6. Machine agricole selon la revendication 5, **caractérisée en ce que** ledit troisième étage de tamisage (20) comprend une tarière montée à l'intérieur de ladite cage (22, 23).

7. Machine agricole selon la revendication 6, **caractérisée en ce que** la tarière tourne autour d'un axe (A) parallèle au sol.

8. Machine agricole selon l'une quelconque des revendications 4 à 7, **caractérisée en ce que** ladite cage (22) est concave pour collecter la récolte sélectionnée par ledit deuxième étage (8).

9. Machine agricole selon l'une quelconque des revendications précédentes, **caractérisée en ce qu'**elle comprend un système de commande pour commander manuellement la vitesse de rotation dudit dispositif de sélection de type tamis à cylindres rotatifs (5).

10. Machine agricole selon l'une quelconque des revendications précédentes, **caractérisée en ce que** ledit dispositif de sélection de type tamis à cylindres rotatifs (5) comprend une pluralité d'ergots radiaux rotatifs constitués d'un matériau souple pour ne pas endommager les fruits.

11. Machine agricole selon l'une quelconque des revendications précédentes, **caractérisée en ce que** ledit dispositif de sélection de type tamis à cylindres rotatifs (5) est relié audit châssis (2) de manière que l'inclinaison par rapport à la composante de mouvement de translation soit réglable.

12. Machine agricole selon l'une quelconque des revendications précédentes, **caractérisée en ce qu'**elle comprend une ouverture (13) disposée entre ledit dispositif de sélection de type tamis à cylindres rotatifs (5) et ledit conteneur (C) vers laquelle est dirigé le mouvement de translation du premier étage pour permettre la chute des déchets jusqu'au sol.

13. Machine agricole selon l'une quelconque des revendications précédentes, **caractérisée en ce qu'**elle comprend une paroi souple ou conformée (11, 25) tournée vers ledit dispositif de sélection de type tamis à cylindres rotatifs (5), ladite paroi étant conçue pour contrecarrer le mouvement vers l'avant de la matière en vrac dans la direction du mouvement de translation et contribuer ainsi à diviser tout agglomérat.

14. Machine agricole selon l'une quelconque des revendications précédentes, **caractérisée en ce qu'**elle comprend une pluralité de manchons coulissants pour supporter radialement les cylindres (6, 8) dudit dispositif de sélection de type tamis à cylindres rotatifs (5), lesdits manchons coulissants étant constitués d'un matériau composite à matrice polymère présentant une structure sensiblement homogène.
